(19) Europäisches Patentamt
European Patent Office
Office européen des brevets

(11) Veröffentlichungsnummer : **0 064 711**
**B1**

(12) **EUROPÄISCHE PATENTSCHRIFT**

(45) Veröffentlichungstag der Patentschrift : **30.01.85**

(51) Int. Cl.[4] : **C 09 B 62/085**, C 09 B 62/51, D 06 P 3/10, D 06 P 3/66

(21) Anmeldenummer : **82103757.9**

(22) Anmeldetag : **03.05.82**

(54) **Diphenyläther-Azoverbindungen, Verfahren zu ihrer Herstellung und ihre Verwendung als Farbstoffe.**

(30) Priorität : **07.05.81 DE 3118073**

(43) Veröffentlichungstag der Anmeldung : **17.11.82 Patentblatt 82/46**

(45) Bekanntmachung des Hinweises auf die Patenterteilung : **30.01.85 Patentblatt 85/05**

(84) Benannte Vertragsstaaten : **CH DE FR GB IT LI**

(56) Entgegenhaltungen :
**DE-B- 1 265 698**
**CHEMICAL ABSTRACTS, Band 91, Nr. 16, Oktober 1979, Seite 69, Nr. 124878r, Columbus, Ohio, USA**
**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

(72) Erfinder : **Meininger, Fritz, Dr.**
**Loreleistrasse 7**
**D-6230 Frankfurt am Main 80 (DE)**
Erfinder : **Otten, Joachim, Dr.**
**Verstorben (DE)**

**EP 0 064 711 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung liegt auf dem technischen Gebiet der faserreaktiven Farbstoffe.

Es wurden neue, wertvolle, wasserlösliche Azoverbindungen entsprechend der allgemeinen Formel

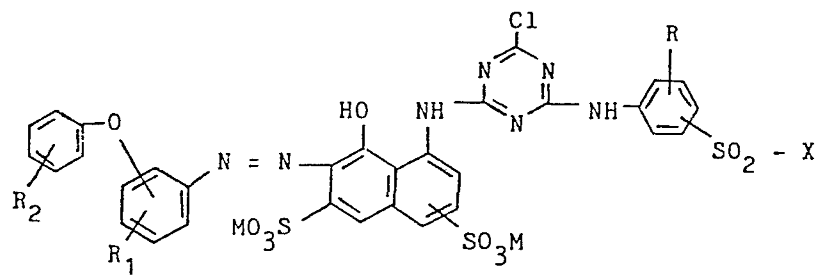

(1)

gefunden, in welcher

M für ein Wasserstoffatom oder das Äquivalent eines Metalls, wie insbesondere eines Alkali- oder Erdalkalimetalls, wie beispielsweise des Natriums, Kaliums, Lithiums und Calciums, steht,

R ein Wasserstoffatom, die Methyl-, Ethyl-, Methoxy-, Ethoxy- oder Carboxygruppe oder ein Halogenatom, wie ein Brom- und insbesondere Chloratom, ist,

$R_1$ ein Wasserstoffatom oder ein Chloratom oder eine Methyl-, Ethyl- oder Sulfogruppe bedeutet,

$R_2$ ein Wasserstoffatom oder ein Chloratom oder eine Methyl-, Ethyl- oder Sulfogruppe oder eine Cyclohexylgruppe darstellt,

X eine β-Sulfatoethyl-Gruppe (entsprechend der Formel $—CH_2—CH_2—OSO_3M$ mit M der obengenannten Bedeutung) oder eine β-Thiosulfatoetyl-Gruppe (entsprechend der Formel $—CH_2—CH_2—S—SO_3M$ mit M der obengenannten Bedeutung) oder die β-Chlorethyl-Gruppe oder insbesondere die Vinylgruppe bedeutet und

die Gruppe der Formel $—SO_2—X$ im Benzolkern in meta- oder para-Stellung zur acylierten Aminogruppe steht sowie

die zweite Gruppe der Formel $—SO_3M$ im Naphthalinkern in meta- oder para-Stellung zur acylierten Aminogruppe gebunden ist.

Die neuen Azoverbindungen können sowohl in saurer Form als auch in Form ihrer Salze vorliegen. Bevorzugt sind sie in Form der Salze, insbesondere der Alkali- und Erdalkalimetallsalze, und finden auch bevorzugt in Form dieser Salze Verwendung zum Färben (hier und im folgenden im allgemeinen Sinne und einschließlich des Bedruckens verstanden) von hydroxy- und/oder carbonamidgruppenhaltigen Materialien, insbesondere Fasermaterialien.

Die vorliegende Erfindung betrifft weiterhin Verfahren zur Herstellung der obengenannten und definierten Azoverbindungen der allgemeinen Formel (1). Sie lassen sich beispielsweise erfindungsgemäß herstellen, indem man eine Verbindung der allgemeinen Formel (2)

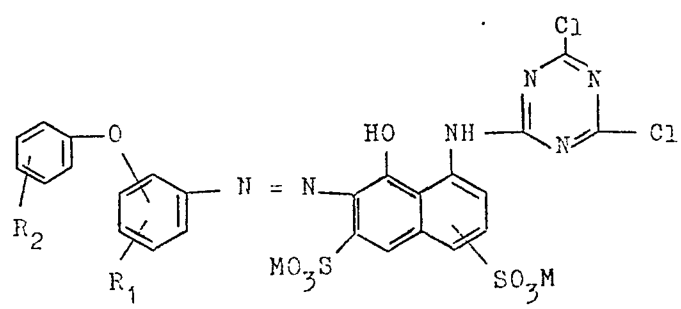

(2)

in welcher $R_1$, $R_2$ und M die obengenannten Bedeutungen besitzen und die zweite Gruppe der Formel $—SO_3M$ im Naphthalinkern in meta- oder para-Stellung zur acylierten Aminogruppe steht, mit einem aromatischen Amin der allgemeinen Formel (3)

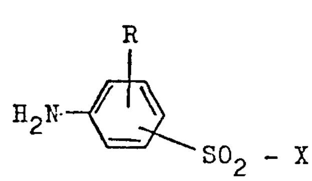

(3)

in welcher R und X die obengenannten Bedeutungen haben und die Gruppe der Formel $—SO_2—X$ im

Benzolkern in meta- oder para-Stellung zur Aminogruppe gebunden ist, umsetzt oder daß man eine Azoverbindung der allgemeinen Formel (4)

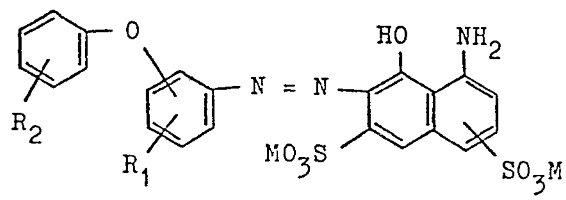

(4)

in welcher $R_1$, $R_2$ und M die obengenannten Bedeutungen besitzen und die zweite Gruppe der Formel $—SO_3M$ im Naphthalinkern in meta- oder para-Stellung zur Aminogruppe gebunden ist, mit einer Dichlortriazinylverbindung der allgemeinen Formel (5)

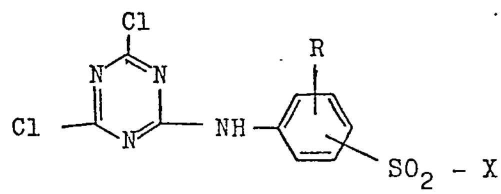

(5)

in welcher R und X die obigen Bedeutungen besitzen und die Gruppe der Formel $—SO_2—X$ im Benzolkern in meta- oder para-Stellung zur acylierten Aminogruppe gebunden ist, umsetzt.

Die Dichlortriazinylaminoverbindung der allgemeinen Formel (2) läßt sich analog bekannter Verfahrensweise durch Kupplung des Diazoniumsalzes einer Verbindung der allgemeinen Formel (6)

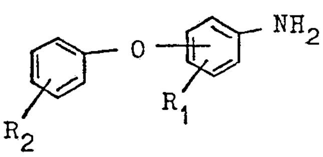

(6)

mit $R_1$ und $R_2$ der obengenannten Bedeutungen mit 1-(2',4'-Dichlor-1',3',5'-triazin-6'-yl)-amino-8-hydroxy-naphthalin-3,6- oder -4,6-disulfonsäure herstellen. Ebenfalls kann die Umsetzung der Dichlortriazinylverbindungen der allgemeinen Formeln (2) und (5) mit den entsprechenden Aminoverbindungen analog bekannter Verfahrensweise erfolgen. Diese Reaktionen sind beispielsweise in W. F. Beech, Fibrereactive Dyes, London 1970, Seiten 148 ff., beschrieben. Die oben erwähnte Kupplungsreaktion erfolgt bevorzugt in einem pH-Bereich zwischen 4 und 7 bei einer Temperatur zwischen 0 °C und 30 °C. Die Kondensationsreaktionen der Dichlortriazinylverbindungen mit den Aminoverbindungen werden in der Regel im wäßrigen Medium, gegebenenfalls unter Mitverwendung eines organischen Lösemittels, bei einer Temperatur zwischen 0 °C und 70 °C, vorzugsweise zwischen 20 °C und 70 °C, und bei einem pH-Wert von vorzugweise zwischen 4 und 7, durchgeführt.

Das erfindungsgemäße Verfahren kann somit in der Weise ausgeführt werden, daß man das Diazoniumsalz der allgemeinen Formel (6) und die Anilinverbindung der allgemeinen Formel (3) gleichzeitig oder in beliebiger Folge mit der 1-(2',4'-Dichlor-1',3',5'-triazin-6'-yl)-amino-8-naphthol-3,6- oder -4,6-disulfonsäure umsetzt.

Die bei den Kondensationsreaktionen freiwerdende Chlorwasserstoffsäure wird mittels säurebindender Mittel, wie beispielsweise Natrium- oder Kaliumhydroxid, Natrium- oder Kaliumcarbonat, Natrium- oder Kaliumbicarbonat, Natriumacetat oder einem basischen Natriumphosphat gebunden.

Die Abscheidung der erfindungsgemäß hergestellten Verbindungen der allgemeinen Formel (1) aus der Syntheselösung kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemäßen Verbindungen der allgemeinen Formel (1) haben faserreaktive Eigenschaften und besitzen sehr gute Farbstoffeigenschaften. Sie können deshalb zum Färben (einschließlich Bedrucken) von hydroxygruppenhaltigen und/oder carbonamidgruppenhaltigen Materialien verwendet werden. Auch können die bei der Synthese der erfindungsgemäßen Verbindungen anfallenden Lösungen, gegebenenfalls nach Zusatz einer Puffersubstanz, gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemäßen

Verbindungen der allgemeinen Formel (1) zum Färben (einschließlich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben.

Hydroxygruppenhaltige Materialien sind solche natürlichen oder synthetischen Ursprungs, wie beispielsweise Cellulosefasermaterialien oder deren Regeneratprodukte und Polyvinylalkahole. Cellulosefasermaterialien sind vorzugsweise Baumwolle, aber auch andere Pflanzenfasern, wie Leinen, Hanf, Jute und Ramifasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Verbindungen der allgemeinen Formel (1) lassen sich auf den genannten Substraten, insbesondere auf den genannten Fasermaterialien, nach den für wasserlösliche, insbesondere nach den für wasserlösliche faserreaktive Farbstoffe bekannten Anwendungstechniken applizieren und fixieren.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, sehr gute Farbausbeuten sowie einen ausgezeichneten Farbaufbau. Man färbt bevorzugt in wäßrigem Bad bei Temperaturen zwischen 60 und 105 °C, gegebenenfalls bei Temperaturen bis zu 120 °C unter Druck und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60 °C, durch Dämpfen oder mit Trockenhitze in üblicher Weise fixiert werden kann.

Ebenfalls nach den üblichen Druckverfahren für Cellulosefasern, die einphasig, beispielsweise in Anwesenheit von Natriumbicarbonat oder einem anderen säurebindenden Mittel in der Druckpaste und durch anschließendes Dämpfen bei 100 bis 103 °C, oder zweiphasig, beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen dieses behandelten Materials oder Dämpfen oder Behandlung mit Trockenhitze, durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200 °C. Neben dem üblichen Wasserdampf von 101 bis 103 °C kann auch überhitzter Dampf und Druckdampf von Temperaturen bis zu 160 °C eingesetzt werden.

Die säurebindenden und die Fixierung der Verbindung der Formel (1) auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Durch die Behandlung der erfindungsgemäßen Verbindungen mit den säurebindenden Mitteln, gegebenenfalls unter Wärmeeinwirkung, werden die erfindungsgemäßen Verbindungen (Farbstoffe) chemisch an die Cellulosefaser gebunden ; sie zeichnen sich auf diesen Fasermaterialien in den Färbe- und Druckverfahren durch eine hohe Fixierausbeute aus. Die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispeilsweise auf Basis eines Umsetzungsproduktes von Cyanurchlorid mit der 3-fach molaren Menge einer Aminobenzolsulfonsäure und/oder einer Aminonaphthalinsulfonsäure oder auf Basis eines Umsetzungsproduktes von beispielsweise Stearylamin mit Ethylenoxide. In der Regel wird das zu färbende Material bei einer Temperatur von etwa 40 °C in das Bad eingebracht, dort einige Zeit darin bewegt, das Färbebad dann auf den gewünschten schwach sauren,

vorzugsweise schwach essigsauren, pH-Wert nachgestellt und die eigentliche Färbung bei einer Temperatur zwischen 60 und 98 °C durchgeführt. Die Färbungen können aber auch bei Siedetemperatur oder bei Temperaturen bis zu 120 °C (unter Druck) ausgeführt werden.

Die mit den erfindungsgemäßen Verbindungen der allgemeinen Formel (1) hergestellten Färbungen und Drucke zeichnen sich durch sehr klare Nuancen aus. Insbesondere besitzen die Färbungen und Drucke auf Cellulosefasermaterialien eine gute Lichtechtheit und sehr gute Maßechtheiten, wie Wasch-, Walk-, Wasser-, Seewasser-, Überfärbe- und Schweißechtheiten, desweiteren eine gute Plissierechtheit, Bügelechtheit und Reibechtheit.

Von besonderer Bedeutung ist die erfindungsgemäße Verwendung der Verbindungen der allgemeinen Formel (1) auch für das faserreaktive Färben von Wolle. Insbesondere läßt sich auch filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298) ; J. Soc. Dyers and Colourists *1972*, 93-99, und *1975*, 33-44) mit sehr guten Echtheitseigenschaften färben.

Das Verfahren des Färbens auf Wolle erfolgt hierbei in üblicher und bekannter Färbeweise, indem die faserreaktive Verbindung der allgemeinen Formel (1) bevorzugt zunächst aus saurem Färbebad mit einem pH von etwa 3,5 bis 5,5 unter Kontrolle des pH-Wertes dem Ausziehprozeß unterworfen wird und gegen Ende der Färbezeit der pH-Wert in den neutralen und gegebenenfalls schwach alkalischen Bereich bis zu einem pH-Wert von 8,5 verschoben wird, um besonders bei einer erwünschten Erzielung von hohen Farbtiefen die volle reaktive Bindung zwischen diesem Farbstoff der Formel (1) und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. Die Färbungen werden bei Temperaturen von 60 bis 100 °C durchgeführt, jedoch können sie auch in geschlossenen Färbeapparaturen bei Temperaturen bis zu 106 °C erfolgen. Da die Wasserlöslichkeit der Verbindungen der allgemeinen Formel (1) sehr gut ist, lassen sie sich auch mit Vorteil bei üblichen kontinuierlichen Färbeverfahren einsetzen. Die Farbstärke der erfindungsgemäßen Verbindungen der allgemeinen Formel (1) ist sehr hoch. Sie liefern auf den Fasermaterialien, insbesondere beim reaktiven Färben von Wolle, sehr klare, blaustichig rote Färbungen. Bei Anwendung von Färbetemperaturen von 100 bis 106 °C ist eine hohe Baderschöpfung festzustellen.

Bei den mit den erfindungsgemäßen Verbindungen der allgemeinen Formel (1) erhältlichen Färbungen kann auf eine ansonsten übliche ammoniakalische Nachbehandlung der gefärbten Ware verzichtet werden. Im Vergleich zu konstitutionell ähnlichen, bekannten Farbstoffen zeigen sie in überraschender Weise einen sehr guten Farbaufbau, wobei die brillante Nuance auch in tiefen Tönen erhalten bleibt. Darüber hinaus zeigen sie eine gute Kombinierbarkeit mit anderen faserreaktiven Wollfarbstoffen, die ein überraschend egales Färben der Faser ermöglichen. Ebenso läßt sich Material aus Wollfasern unterschiedlicher Provenienz mit den erfindungsgemäßen Verbindungen egal färben. Zur Verbesserung des Egalisierverhaltens kann gegebenenfalls ein übliches Egalisierhilfsmittel, wie beispielsweise N-Methyltaurin, zugesetzt werden.

Unter Verwendung der üblichen faseraffinen Färbehilfsmittel ergeben die erfindungsgemäßen Verbindungen auch auf filzfrei oder filzarm ausgerüsteter Wolle egale Färbungen. Bei hellen bis mittleren Farbtiefen ist auch ohne ammoniakalische Nachbehandlung ein sehr gutes Naßechtheitsniveau zu erzielen, wobei jedoch gegebenenfalls eine ammoniakalische Nachbehandlung bevorzugt werden kann. Neben der hohen Lichtechtheit dieser Wollfärbungen sind als sehr gute Naßechtheitseigenschaften insbesondere die ausgezeichnete alkalische Schweißechtheit und sehr gute Waschechtheit bei 60 °C, auch von Färbungen in hohen Farbtiefen, zu nennen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

## Beispiel 1

a) Unter kräftigem Rühren werden 319 Teile 1-Amino-8-naphthol-3,6-disulfonsäure als trockene, gemahlene Ware in eine Suspension aus 190 Teilen Cyanurchlorid, 2 000 Teilen Wasser und 400 Teilen Eis eingetragen. Das Reaktionsgemisch wird drei Stunden bei einer Temperatur zwischen 12 und 16 °C und einem pH-Wert zwischen 1,8 und 2,3 der mittels etwa 160 Teilen Natriumbicarbonat durch portionsweise Zugabe gehalten wird, weitergerührt. Nach dieser Zeit ist die Umsetzung beendet und es ist kein freies Amin mehr nachweisbar.

b) Getrennt von dem unter a) beschriebenen Ansatz wird das Diazoniumsalz des 2-Amino-diphenyläthers hergestellt : 185 Teile 2-Amino-diphenyläther werden in eine Mischung aus 1 200 Teilen Wasser und 200 Volumenteilen konzentrierter wässriger Salzsäure eingetragen und darin fein dispergiert. Zu dieser Suspension gibt man innerhalb von 30 Minuten bei einer Temperatur zwischen 10 und 15 °C 200 Volumenteile einer wässrigen 5N-Natriumnitritlösung. Es wird noch eine Stunde nachgerührt, überschüssige salpetrige Säure mit wenig Amidosulfonsäure sodann zerstört.

c) Die unter b) hergestellte salzsaure, wässrige Diazoniumsalzlösung/-suspension wird sodann in den unter a) hergestellten Ansatz eingerührt. Dieses vereinigte Reaktionsgemisch wird mittels Natriumbicarbonat auf einen pH-Wert zwischen 4,5 und 5 eingestellt und noch zwei Stunden innerhalb dieses pH-Bereiches und bei einer Temperatur zwischen 10 und 15 °C nachgerührt.

d) Getrennt hiervon wird eine wässrige Suspension von 4-Vinylsulfonyl-anilin hergestellt :

300 Teile 4-β-Sulfatoäthylsulfonyl-anilin werden in 2 000 Teilen Wasser unter Zusatz von 105 Teilen Natriumbicarbonat neutral gelöst. Bei 20 °C werden innerhalb von 30 Minuten 30 Volumenteile einer wässrigen, 33 %igen Natronlauge zugetropft. Es wird noch 30 Minuten lang bei 20 °C nachgerührt.

e) Die unter d) hergestellte Suspension wird in den unter c) hergestellten Ansatz eingerührt und dieses Reaktionsgemisch eine Stunde lang bei einer Temperatur zwischen 25 und 30 °C und einem pH-Wert zwischen 5,0 und 5,5 gerührt. Anschließend wird die Temperatur des Reaktionsansatzes innerhalb von zwei Stunden allmählich auf 50 °C erhöht, wobei der pH-Wert mittels Natriumbicarbonat zwischen 6,0 und 6,5 gehalten wird. Nach Beendigung der Reaktion läßt man langsam unter Rühren auf Raumtemperatur abkühlen. Die ausgefallene Verbindung wird abgesaugt, zweimal mit je 700 Volumenteilen einer 15 %igen wässrigen Natriumchloridlösung gewaschen, der feuchte Filterkuchen sodann sorgfältig mit 60 Teilen Dinatriumphosphat vermischt und bei 55 bis 60 °C unter reduziertem Druck getrocknet. Das Produkt wird gemahlen, und man erhält etwa 1 080 Teile eines elektrolythaltigen, roten Pulvers, das das Natriumsalz der Verbindung der Formel

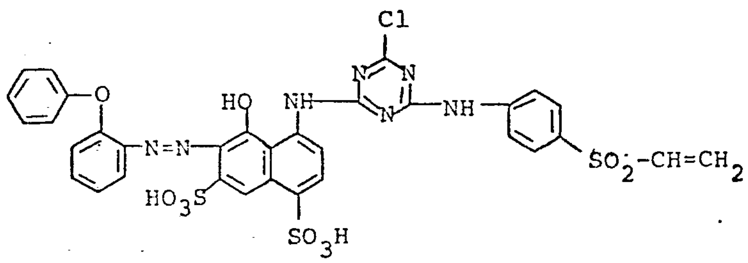

enthält. Diese erfindungsgemäße Verbindung zeigt sehr gute faserreaktive Farbstoffeigenschaften. Nach üblichen Färbemethoden liefert dieser Farbstoff beispielsweise auf Wolle, einschließliche filzarm ausgerüsteter Wolle, klare blaustichig rote Färbungen und Drucke von sehr guten Naßechtheiten mit hoher Farbtiefe ; von den Naßechtheiten ist insbesondere die sehr gute Waschechtheit bei 60 °C hervorzuheben.

### Beispiel 2

Man verfährt in der im Beispiel 1 angegebenen Verfahrensweise zur Herstellung einer erfindungsgemäßen Verbindung, verwendet jedoch in der Kupplungsreaktion gemäß Beispiel 1c) anstelle der dort eingesetzten Diazoniumverbindung eine Diazoniumsalzlösung/-suspension aus 267 Teilen 2-Amino-2'-cyclohexyl-diphenyläther.

Nach üblicher Aufarbeitung, wie beispielsweise im Beispiel 1 beschrieben, erhält man ein elektrolythaltiges Pulver, das das Natriumsalz der Verbindung der Formel

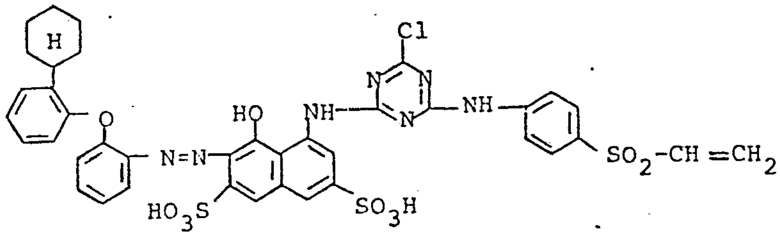

enthält. Diese erfindungsgemäße Verbindung zeigt sehr gute faserreaktive Farbstoffeigenschaften und liefert beispielsweise auf Baumwolle nach den in der Technik üblichen Applikations- und Fixiermethoden klare blaustichig rote Färbungen und Drucke mit sehr guten Naßechtheiten. In ebenfalls guter Qualität lassen sich beispielsweise Zellwolle und Wolle färben.

### Beispiel 3

Man verfährt in der im Beispiel 1 beschriebenen Verfahrensweise zur Herstellung einer erfindungsgemäßen Verbindung, verwendet jedoch in der sekundären Kondensationsstufe des Beispiels 1e) anstelle des dort verwendeten 4-Vinylsulfonylanilins eine neutrale Lösung aus 300 Teilen 4-β-Sulfatoäthylsulfonylanilin und 105 Teilen Natriumbicarbonat in 2 000 Teilen Wasser.

Nach Beendigung der Umsetzung läßt man diesen Ansatz unter Rühren auf Raumtemperatur abkühlen ; hierbei trägt man noch 250 Teile Natriumchlorid ein, um die Ausfällung der erfindungsgemäßen Verbindung aus dem Ansatz zu vervollständigen. Nach der üblichen Isolierung wird das Natriumsalz der Verbindung der Formel

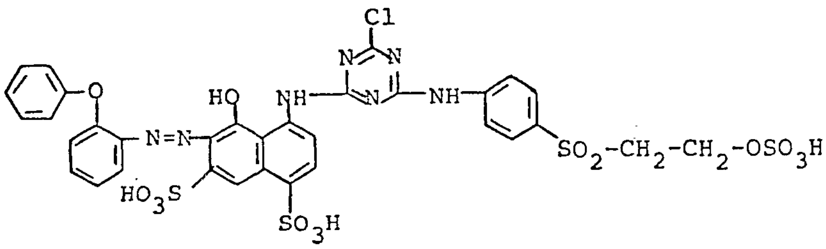

erhalten, das sehr gute faserreaktive Farbstoffeigenschaften besitzt. Es liefert beispielsweise auf Wolle oder Baumwolle nach den in der Technik für faserreaktive Farbstoffe üblichen Applikations- und Fixiermethoden Färbungen und Drucke in klaren blaustichig roten Tönen. Die mit dieser erfindungsgemäßen Verbindung herstellbaren Färbungen und Drucke zeigen eine gute Lichtechtheit und gute Naßechtheiten.

Beispiel 4

Unter kräftigem Rühren trägt man innerhalb von 30 Minuten 319 Teile 1-Amino-8-naphtol-4,6-disulfonsäure als trockene, gemahlene Ware in eine Suspension von 190 Teilen Cyanurchlorid in 2 500 Teilen Eiswasser ein. Dieses Reaktionsgemisch wird noch 3 Stunden nachgerührt, wobei die Temperatur zwischen 0 und 5 °C und der pH-Wert mittels Natriumbicarbonat zwischen 1,7 und 2,0 gehalten wird. Nach dieser Zeit ist die Umsetzung beendet und kein freies Amin mehr nachweisbar. Zu diesem Ansatz wird die salzsaure, wässrige Diazoniumsalzlösung/-suspension von Beispiel 1b) hinzu gegeben. Die weitere Umsetzung zur erfindungsgemäßen Verbindung und deren Isolierung wird gemäß Beispiel 1 durchgeführt. Es wird ein rotes, elektrolythaltiges Pulver erhalten, das das Natriumsalz der Verbindung der Formel

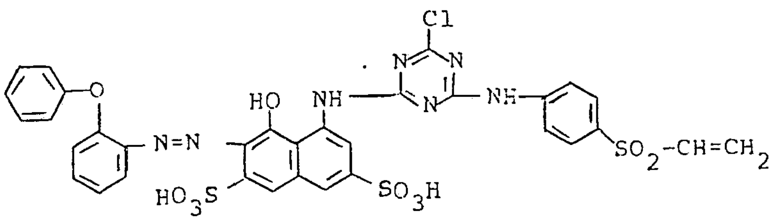

enthält. Diese Verbindung liefert beispielsweise auf Wolle, Baumwolle und Zellwolle nach den in der Technik für faserreaktive Farbstoffe üblichen Applikations- und Fixiermethoden Färbungen und Drucke in klaren, blaustichig roten Tönen von sehr guten Naßechtheitseigenschaften.

Beispiel 5

Zur Herstellung einer erfindungsgemäßen Verbindung verfährt man wie im Beispiel 4 beschrieben, verwendet jedoch für die sekundäre Kondensationsstufe anstelle von 4-Vinylsulfonyl-anilin eine neutrale Lösung aus 316 Teilen 4-β-Thiosulfato-äthylsulfonyl-anilin und 105 Teilen Natriumbicarbonat in 2 000 Teilen Wasser. Nach Beendigung der Umsetzung läßt man unter Rühren auf Raumtemperatur abkühlen, wobei man noch zur Vervollständigung der Ausfällung der erfindungsgemäßen Verbindung 300 Teile Natriumchlorid einträgt.

Man erhält das Natriumsalz der Verbindung der Formel

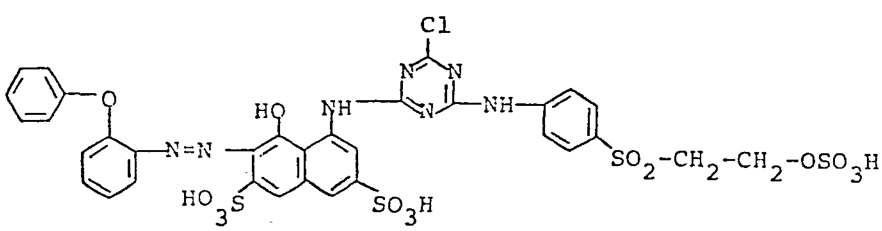

in Form eines elektrolythaltigen Pulvers ; es zeigt wertvolle Farbstoffeigenschaften und liefert beispielsweise auf Wolle, Baumwolle und Zellwolle klare blaustichig rote Färbungen und Drucke mit sehr guten Naßechtheitseigenschaften.

Beispiele 6 bis 29

Man verfährt zur Herstellung der in den nachfolgenden Tabellenbeispielen beschriebenen erfindungsgemäßen Verbindungen in einer der erfindungsgemäßen Verfahrensweisen zur Herstellung der Verbindungen der Formel (1), beispielsweise in analoger Weise, wie in den vorhergehenden Beispielen beschrieben, setzt jedoch hierzu die in den nachfolgenden Tabellenbeispielen angegebenen Ausgangsverbindungen in entsprechender Weise ein. Die so erhaltenen, in den nachfolgenden Tabellenbeispielen durch diese Ausgangsverbindungen charakterisierten erfindungsgemäßen Verbindungen entsprechend der allgemeinen Formel (1) zeigen gute faserreaktive Farbstoffeigenschaften und färben die in der Beschreibung genannten Materialien, wie beispielsweise Wolle, Baumwolle und Zellwolle, in blaustichig roten Tönen mit guten bis sehr guten Naßechtheiten.

Verbindung der allgemeinen Formel (1)

| Bsp. | Diazokomponente der allgemeinen Formel (6) | Stellung der 2. Sulfogruppe zum Acylaminorest im Naphthalinkern | Anilinverbindung der allgemeinen Formel (3) |
|---|---|---|---|
| 6 | 2-Amino-diphenyläther | meta | 3-β-Sulfatoäthylsulfonyl-anilin |
| 7 | dito | para | dito |
| 8 | dito | meta | 4-β-Thiosulfatoäthylsulfonyl-anilin |
| 9 | dito | meta | 4-Methoxy-3-β-sulfatoäthylsulfonyl-anilin |
| 10 | dito | meta | 2-Methoxy-5-vinylsulfonyl-anilin |
| 11 | 2-Amino-2'-methyl-diphenyläther | meta | 4-Vinylsulfonyl-anilin |
| 12 | dito | para | dito |
| 13 | dito | meta | 4-β-Sulfatoäthylsulfonyl-anilin |
| 14 | dito | meta | 4-β-Thiosulfatoäthylsulfonyl-anilin |
| 15 | 2-Amino-2'-cyclohexyl-diphenyläther | meta | 3-Vinylsulfonyl-anilin |
| 16 | dito | meta | 4-β-Sulfatoäthylsulfonyl-anilin |
| 17 | dito | meta | 4-β-Thiosulfatoäthylsulfonyl-anilin |
| 18 | dito | para | dito |
| 19 | dito | para | 4-Methoxy-3-β-thiosulfatoäthylsulfonyl-anilin |
| 20 | 2-Amino-2'-cyclohexyl-diphenyläther | meta | 2-Brom-4-β-sulfatoäthylsulfonyl-anilin |
| 21 | 4-Chlor-2-amino-diphenyläther | meta | 4-β-Sulfatoäthylsulfonyl-anilin |
| 22 | 4,4'-Dichlor-2-aminodiphenyläther | meta | 3-β-Sulfatoäthylsulfonyl-anilin |
| 23 | 4-Amino-diphenyläther | meta | 4-Vinylsulfonyl-anilin |
| 24 | dito | para | 4-β-Sulfatoäthylsulfonyl-anilin |
| 25 | 2-Amino-diphenyläther-4-sulfonsäure | meta | 4-Vinylsulfonyl-anilin |
| 26 | 4-Amino-diphenyläther-2-sulfonsäure | meta | 4-β-Sulfatoäthylsulfonyl-anilin |
| 27 | 4-Amino-diphenyläther-3-sulfonsäure | para | 3-Vinylsulfonyl-anilin |
| 28 | dito | meta | 2-Aminobenzoesäure-4-β-sulfatoäthylsulfon |
| 29 | dito | meta | 4-Methoxy-anilin-3-β-sulfatoäthylsulfon |

**Ansprüche**

1. Verbindungen der allgemeinen Formel (1)

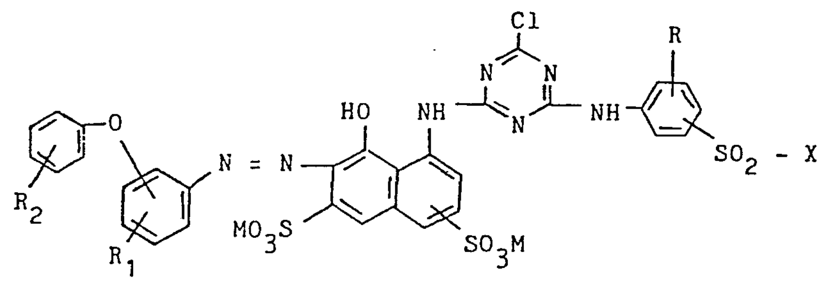

(1)

in welcher

M für ein Wasserstoffatom oder das Äquivalent eines Metalls steht,

R ein Wasserstoffatom, eine Methyl-, Ethyl-, Methoxy-, Ethoxy- oder Carboxygruppe oder ein Halogenatom ist und

$R_1$ ein Wasserstoffatom oder ein Chloratom oder eine Methyl-, Ethyl- oder Sulfogruppe bedeutet,

$R_2$ ein Wasserstoffatom oder ein Chloratom oder eine Methyl-, Ethyl- oder Sulfogruppe oder eine Cyclohexylgruppe darstellt,

X die Vinylgruppe, eine β-Sulfatoethyl-, eine β-Thiosulfatoethyl- oder die β-Chlorethyl-Gruppe bedeutet und

die Gruppe der Formel $—SO_2—X$ im Benzolkern in meta- oder para-Stellung zur acylierten Aminogruppe steht sowie

die zweite Gruppe der Formel $—SO_3M$ im Naphthalinkern in meta- oder para-Stellung zur acylierten Aminogruppe gebunden ist.

2. Verbindungen nach Anspruch 1, dadurch gekennzeichnet, daß M für Natrium, Kalium, Lithium oder das Äquivalent des Calciums steht.

3. Verfahren zur Herstellung der in Anspruch 1 genannten und definierten Verbindungen der allgemeinen Formel (1), dadurch gekennzeichnet, daß man eine Verbindung der allgemeinen Formel (2)

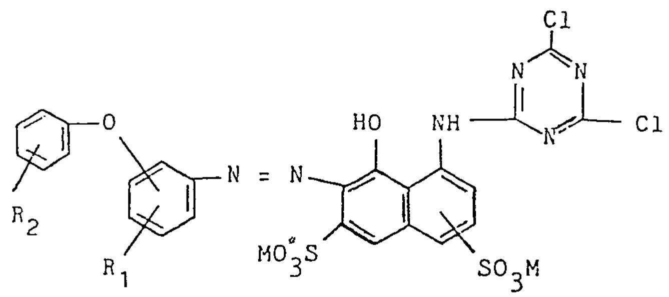

(2)

in welcher $R_1$, $R_2$ und M die in Anspruch 1 genannten Bedeutungen besitzten und die zweite Gruppe der Formel $—SO_3M$ im Naphthalinkern in meta- oder para-Stellung zur acylierten Aminogruppe steht, mit einer Aminoverbindung der allgemeinen Formel (3)

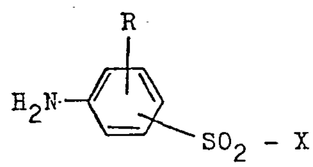

(3)

in welcher R und X die in Anspruch 1 genannten Bedeutungen haben und die Gruppe der Formel $—SO_2—X$ im Benzolkern in meta- oder para-Stellung zur Aminogruppe gebunden ist, umsetzt oder daß man eine Verbindung der allgemeinen Formel (4)

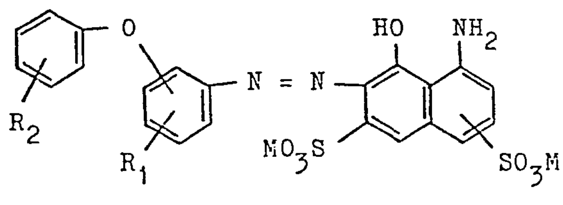

(4)

in welcher $R_1$, $R_2$ und M die in Anspruch 1 genannten Bedeutungen besitzen und die zweite Gruppe der Formel $—SO_3M$ im Naphthalinkern in meta- oder para-Stellung zur Aminogruppe gebunden ist, mit einer Dichlortriazinylverbindung der allgemeinen Formel (5)

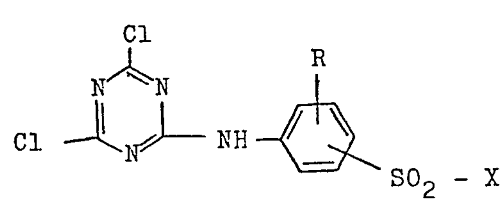

(5)

in welcher R und X die Anspruch 1 genannten Bedeutungen besitzen und die Gruppe der Formel

—$SO_2$—X im Benzolkern in meta- oder para-Stellung zur acylierten Aminogruppe gebunden ist, umsetzt.

4. Verwendung der in Anspruch 1 genannten und definierten Verbindungen der allgemeinen Formel (1) zum Färben oder Bedrucken von hydroxy- und/oder carbonamidgruppenhaltigen Materialien, insbesondere Fasern.

5. Materialien aus hydroxy- und/oder carbonamidgruppenhaltigen Fasern, die mit einer Verbindung von Anspruch 1 gefärbt oder bedruckt wurden.

6. Verfahren zum Färben von hydroxy- und/oder carbonamidgruppenhaltigem Material, bei welchem man einen Farbstoff auf das Material aufbringt oder in das Material einbringt und ihn darauf oder gegebenenfalls darin, gegebenenfalls in der Wärme und/oder in Gegenwart eines säurebindenden Mittels, fixiert, dadurch gekennzeichnet, daß man als Farbstoff eine Verbindung der in Anspruch 1 genannten und definierten allgemeinen Formel (1) einsetzt.

**Claims**

1. Compounds of the general formula (1)

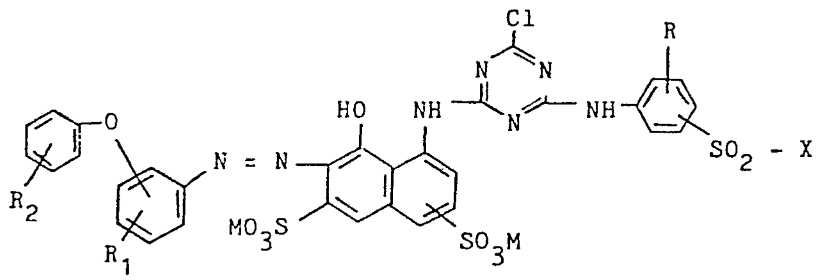

(1)

wherein

M represents a hydrogen atom or the equivalent of a metal,

R is a hydrogen atom, a methyl, ethyl, methoxy, ethoxy or carboxy group or a halogen atom,

$R_1$ denotes a hydrogen atom or a chlorine atom or a methyl, ethyl or sulfo group,

$R_2$ represents a hydrogen atom or a chlorine atom or a methyl, ethyl or sulfo group or a cyclohexyl group,

X denotes the vinyl group, a β-sulfatoethyl, a β-thiosulfatoethyl or the β-chloroethyl group, and

the group of the formula —$SO_2$—X in the benzene nucleus is in the meta- or para-position relative to the acylated amino group and

the second group of the formula —$SO_3M$ in the naphthalene nucleus is in the meta- or para-position relative to the acylated amino group.

2. Compounds according to claim 1, characterized by that M represents sodium, potassium, lithium or the equivalent of calcium.

3. A process for the manufacture of the compounds of the general formula (1) specified and defined in claim 1, characterized by reacting a compound of the general formula (2)

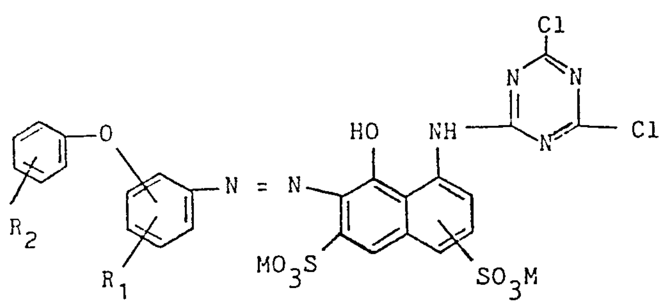

(2)

wherein $R_1$, $R_2$ and M have the meanings mentioned in claim 1 and the second group of the formula —$SO_3M$ in the naphthalene nucleus is in the meta- or para-position relative to the acylated amino group, with an amino compound of the general formula (3)

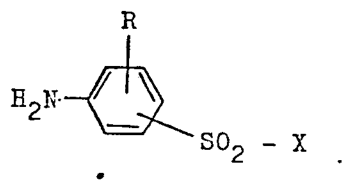

(3)

wherein R and X have the meanings mentioned in claim 1 and the group of the formula —$SO_2$—X in the benzene nucleus is in the meta- or para-position relative to the amino group, or by reacting a compound or the general formula (4)

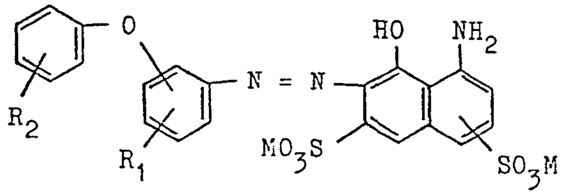

(4)

wherein $R_1$, $R_2$ and M have the meanings mentioned in claim 1 and the second group of the formula —$SO_3M$ in the naphthalene nucleus is in the meta- or para-position relative to the amino group, with a dichlorotriazinyl compound of the general formula (5)

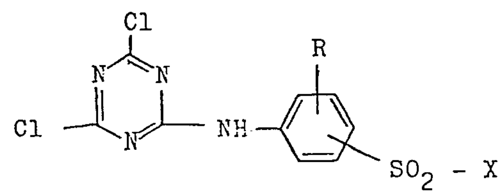

(5)

wherein R and X have the meanings mentioned in claim 1 and the group of the formula —$SO_2$—X in the benzene nucleus is in the meta- or para-position relative to the acylated amino group.

4. Use of the compounds of the general formula (1) specified and defined in claim 1, for dyeing or printing material, in particular fibres, containing hydroxy and/or carbonamide groups.

5. Materials made from fibres containing hydroxy and/or carbonamide groups, which have been dyed or printed with a compound of claim 1.

6. A process for coloring a material containing hydroxy and/or carbonamide groups, wherein a dyestuff is applied for the material or incorporated into the material and fixed thereon or optionally therein, optionally by the action of heat and/or in the presence of an acid-bilding agent, characterized by that a compound of the general formula (1) specified and defined in claim 1, is used as the dyestuff.

**Revendications**

1. Composés répondant à la formule générale (1)

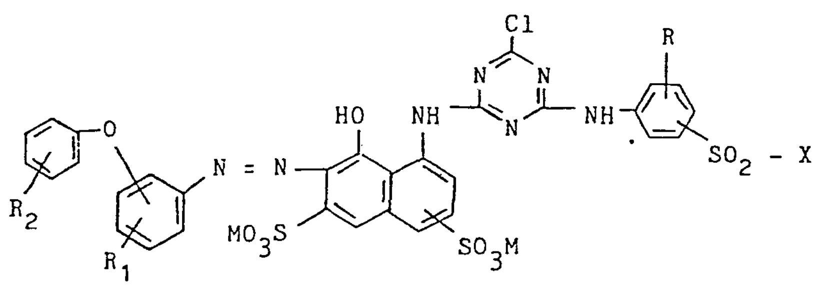

(1)

dans laquelle

M représente un atome d'hydrogène ou l'équivalent d'un métal,

R représente un atome d'hydrogène ou d'halogène ou un radical méthyle, éthyle, méthoxy, éthoxy ou carboxy,

$R_1$ représente un atome d'hydrogène ou de chlore ou un radical méthyle, éthyle ou sulfo,

$R_2$ représente un atome d'hydrogène ou de chlore ou un radical méthyle, éthyle, sulfo ou cyclohexyle et

X représente un radical vinyle, β-sulfatoéthyle, β-thiosulfato-éthyle ou β-chloroéthyle,

et dans laquelle

le radical —$SO_2$—X occupe, sur le noyau benzénique, une position méta ou para relativement au radical amino acylé, et

le deuxième radical —$SO_3M$ occupe, sur le noyau naphtalénique, une position méta ou para relativement au radical amino acylé.

2. Composés selon la revendication 1 caractérisés en ce que M représente le sodium, le potassium, le lithium ou un équivalent de calcium.

3. Procédé de préparation des composés de formule générale (1) qui ont été mentionnés et définis à la revendication 1, procédé caractérisé en ce qu'on fait réagir un composé répondant à la formule générale (2)

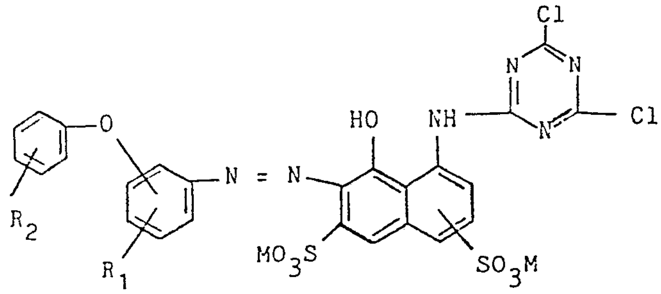

(2)

dans laquelle $R_1$, $R_2$ et M ont les significations données à la revendication 1 et dans laquelle le second radical $—SO_3M$ se trouve, sur le noyau napthalénique, en position méta ou para rapport au radical amino acylé, avec un composé aminé répondant à la formule générale (3)

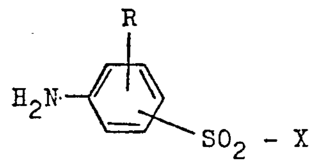

(3)

dans laquelle R et X ont les significations données à la revendication 1 et dans laquelle le radical $—SO_2—X$ se trouve, sur le noyau benzénique, en position méta ou para par rapport au radical amino, ou on fait réagir un composé répondant à la formule générale (4)

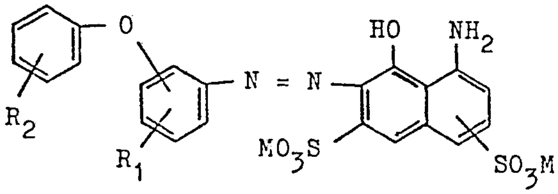

(4)

dans laquelle $R_1$, $R_2$ et M ont les significations données à la revendication 1 et dans laquelle le deuxième radical $—SO_3M$ occupe, sur le noyau naphtalénique, une position méta ou para par rapport au radical amino avec un composé dichlorotriazinylique répondant à la formule générale (5)

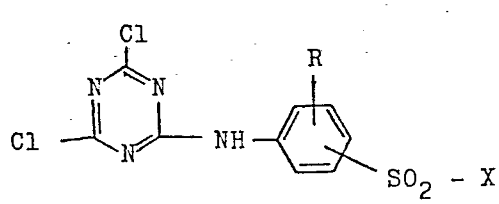

(5)

dans laquelle R et X ont les significations données à la revendication 1 et dans laquelle le radical $—SO_2—X$ occupe, sur le noyau benzénique, une position méta ou para par rapport au radical amino acylé.

4. Application des composés de formule générale (1) mentionnés et définis à la revendication 1 à la teinture ou à l'impression de matières contenant des radicaux hydroxy et/ou carbamoyles, plus particulièrement de fibres.

5. Matières en fibres contenant des radicaux hydroxy et/ou carbamoyles qui ont été teintes ou imprimées à l'aide d'un composé selon la revendication 1.

6. Procédé pour teindre une matière contenant des radicaux hydroxy et/ou carbamoyles selon lequel on applique un colorant sur la matière, ou on introduit un colorant dans la matière, et on fixe ce colorant sur et éventuellement dans ladite matière, éventuellement à chaud et/ou en présence d'un accepteur d'acides, et qui est caractérisé en ce qu'on utilise comme colorant un composé répondant à la formule générale (1) qui a été représentée et définie à la revendication 1.